# EUROPEAN PATENT APPLICATION

(11) **EP 1 645 970 A1**
(43) Date of publication of application: **12.04.2006**
(21) Application number: 03817432.2
(22) Date of filing: 15.07.2003
(51) Int. Cl.: G06F 15/00, G06K 19/00, G06Q 10/00, H04L 9/32

(54) **INDIVIDUAL AUTHENTICATION METHOD USING A RECORDING MEDIUM AND INDIVIDUAL AUTHENTICATION SYSTEM USING A RECORDING MEDIUM**

(71) Applicant: Kokumai, Hitoshi, Hyogo 651-1211 (JP); MIHARA, Makoto, Yokohama-shi, Kanagawa 227-0065 (JP)
(72) Inventor: Kokumai, Hitoshi, Hyogo 651-1211 (JP); MIHARA, Makoto, Yokohama-shi, Kanagawa 227-0065 (JP)
(74) Representative: Boydell, John Christopher
(86) International application number: PCT/JP2003/009002
(87) International publication number: WO 2005/006202

(57) **Abstract**

An individual authentication method using a recording medium and an individual authentication system using a recording medium for facilitating a user to memorize the user information, making it difficult for a third person to set up for the user, reducing the user rejection ratio, and heightening the barier For a third person to set up for the user.

User information consisting of at lest one information unit which a user to be registered knows and non-user information consisting of at least one information unitwhich the user dose not know are registered in advance knows on the recording medium for authentication of the user so as to form the registration information

When performing authentication, a user candidate user his/her recording medium to indicate the registration information recorded directly or indirectly.

The individual authentication method uses such a recording Medium that only when the user candidate selects the user information, the candidate can be authenticated.

## Description

### Technical Field

The present invention relates an individual authentication method using a recording medium and an individual authentication system using a recording medium.

### Background Art

As individual authentication methods, password authentication and biometrics authentication are known.

The password authentication is a simple authentication method as a system and widely used these days. From a viewpoint of the cognitive psychology, this method is categorized as a method of "retrieving" and "reproducing" a meaningless symbol memory or a "semantic memory", a memory that is not accompanied by experience, from memory storage information in the human brain.

However, as already known as a problem of passwords, reproduction of meaningless symbols or a semantic memory without experience is difficult for a person with a short memory, especially for an elderly person, and easily leads to an errorous reproduction. Converting simple numbers or symbols into a semantic memory and memorizing the semantic memory typically, using the birth date as a password, is a common practice employed in order to avoid such a drawback. However, examples of the conversion of numbers into a semantic memory are extremely limited for most people, to the birth dates or the like, and damages from morphing by a third person could easily caused.

In order to minimize the damage occurring when a password is stolen, it is desirable to use a different password for a different authentication medium. However, because it is difficult to memorize, recall, and reproduce the passwords corresponding to the respective authentication media, it is often the case that these passwords are written down in a notebook and such. As a result, when the notebook and such is stolen, all of the passwords are stolen.

The latter, i.e., the biometrics authentication, uses physiological information inherent in a user, so that the biometrics authentication can advantageously prevent the information from being forgotten or lost. However, since the information is unique to the user, it is not possible to use different user authentication information for each recording medium. Thus, it is not possible to use different user authentication information for each recording medium. Thus, there are problems that, when the user authentication information is stolen, all the authentication media are damaged, and alternative user information can be disadvantageously very difficult to be obtained.

In addition, an input device is newly required to read physiological information. Furthermore, because inputted information changes depending on input/read conditions, there is a problem that a so-called user rejection ratio, which indicates rejection of an authenticated user, occurs at a predetermined probability. In addition, when the barrier for checking is lowered to reduce the rejection probability, the probability of morphing of the user by a third person increases. A trade-off relationship between the user rejection ratio and the morphing probability by a third person is an inevitable problem.

Therefore, the present invention has as its object to, in an individual authentication method using a recording medium and an individual authentication system using a recording medium, to make it easy to memory user information and to make it hard to cause a third person to set up for a user to solve the problem of the password authentication of the former, furthermore, to make user authentication information changeable in units of recording media and to simplify an input/read mechanism of authentication information to solve the problem of the biometrics authentication of the latter, to reduce a user rejection ratio, and to heighten the barrier for a third person to set up for the user.

### DISCLOSURE OF THE INVENTION

The first invention (claim 1) of the present applicant provides an individual authentication method using a recording medium including a. the registration information forming step of registering both user information including at least one information unit known by a user to be registered in authentication and non-user information including at least one information unit unknown by the user in the recording medium in advance to form registration information; b. the registration information issuing step of issuing at least one of the registration information and access information to access a registered medium to the user; c. the registration information presenting step of causing a user candidate to present registration information directly or indirectly recorded on the recording medium by using a recording medium owned by the user candidate in user authentication; d. the user information selecting step of causing the user candidate to select the user information in the presented registration information; and e. the user authentication step of authenticating the user candidate as the user only when the user candidate selects the user information in the registration information.

The second invention of the present applicant (invention of claim 2) provides an individual authentication method using a recording medium including: a. the registration information forming step of registering both user information including at least one information unit known by a user to be registered in authentication and non-user information including at least one information unit unknown by the user for user authentication in the recording medium built in an electronic device in advance to form registration information; b. the registration information issuing step of issuing access information to access the recording medium on which the registered information to the user; c. the registration information presenting step of causing a user candidate to access the recording medium of the electronic device by the access information owned by the user candidate to present registration information recorded on the recording medium; d. a user information selecting step of causing the user candidate to select the user information presented by the recording medium of the electronic device on an authentication management side; and e. a user authentication step of authenticating the user candidate as the user only when the user candidate selects the user information in the registration information.

The third invention (invention of claim 6) of the present application provides an individual authentication system using a recording medium, the recording medium being constituted by a memory function by using an electronic device in which a memory function is built, the memory function having functions of: registration information recording means which registers both user information including at least one information unit known by a user to be registered in authentication and non-user information including at least one information unit unknown by the user for user authentication in the recording medium in advance to record registration information; and access information recording means which records access information given to the user, including an authentication computer having: access information comparison determining means which confirms, when a user candidate inputs access information, that the access information is access information given to the user candidate in user authentication; registration presenting means which outputs the registration information recorded on the registration information recording means on the basis of generation of a confirmation signal from the access information determining means; user information determining means which compares input user information selected from the presented registration information with the recorded user information for authentication; and an authentication signal generating means which generates an authentication signal to the electronic device in which the recording medium is built on the basis of authentication determination of the user information determining means to permit the user to use the electronic device.

The fourth invention (invention of claim 7) of the present application provides an individual authentication system using a recording medium, the recording medium being managed by a user as recording means such as paper, a metal, ceramics, a magnetic medium, an optical medium, and electronic medium having a recording function, the recording medium having functions of: registration information recording means which registers both user information including at least one information unit known by the user to be registered in authentication and non-user information including at least one information unit unknown by the user for user authentication in advance to record registration information; and access information recording means which records access information given to respective recording media, including an authentication computer having: access information comparison determining means which confirms, when a user candidate inputs access information, that the access information is access information given to the user candidate in user information determining means which compares input user information selected from the presented registration information with the recorded user information for authentication on the basis of generation of a confirmation signal from the access information determining means; and an authentication signal generating means to generate an authentication signal to the electronic device to be authenticated by the recording medium on the basis of authentication determination of the user information determining means.

The fifth invention (invention of claim 8) of the present application provides an individual authentication system using a recording medium, the recording medium being managed by a user as recording means such as paper, a metal, ceramics, a magnetic medium, an optical medium, and electronic medium having a recording function, the recording medium having a function of access information recording means which records access information given to respective recording media, including an authentication computer having: access information comparison determining means which confirms, when a user candidate inputs access information, that the access information is access information given from the recording medium to the user candidate in user authentication; registration information presenting means which outputs the registration information recorded by the registration information recording means on the basis of generation of a confirmation signal from the access information determining means; user information determining means which compares input user information selected from the presented registration information with the recorded user information for authentication; and an authentication signal generating means to generate an authentication signal to the electronic device to be authenticated by the recording medium on the basis of authentication determination of the user information determining means.

### BRIEF DESCRIPTION OF THE INVENTION

FIG. 1 is a diagram for explaining a display surface of registration information in an embodiment of an invention of the present application.
FIG. 2 is a flow chart showing an authenticating operation when the invention of the present application.
FIG. 3 is a block diagram of an individual authentication system showing an embodiment of the third invention of the present application.
FIG. 4 is a block diagram of an individual authentication system showing an embodiment of the fourth invention of the present application.
FIG. 5 is a block diagram of an individual authentication system showing an embodiment of the fifth invention of the present application.

### BEST MODE FOR CARRYING OUT THE INVENTION

An authenticating operation according to a first invention of the present application will be described below.
1. Both user information including at least one information unit known by a user and non-user information including at least one information unit unknown by the user are registered in a recording medium (for example, a memory function of a terminal device owned by the user or a memory mechanism of an electronic device on an authentication management side) accessed by a recording medium issued to the user for user authentication or access information recorded on the recording medium to form registration information.
2. In user authentication, recording information directly or indirectly recorded on a recording medium owned by a user candidate is read to present registration information to the user candidate.
3. The user candidate selects user information in the presented registration information and determine the user information.
4. The user candidate is "authenticated as the user" only when the user information is selected from the presented registration information.

An authenticating operation according to the second invention of the present application is different from that of the first invention in that registration information is managed on an authentication management side and that the registration information is presented to a user candidate on the basis of recording information recorded on a memory function of an electronic device in user authentication.

The third invention of the present application uses a memory function given to an authentication computer.

The memory function is constructed to have functions of: registration information recording means which registers both user information including at least one information unit known by a user to be registered in authentication and non-user information including at least one information unit unknown by the user for user authentication in the recording medium in advance to record registration information; and access information recording means which records access information given to the respective electronic devices.

An individual authentication system using a recording medium is constituted by an authentication computer which requires: access information comparison determining means which confirms, when a user candidate inputs access information, that the access information is access information given to the user candidate in user authentication; registration presenting means which outputs the registration information recorded on the registration information recording means on the basis of generation of a confirmation signal from the access information determining means; user information determining means which compares input user information selected from the presented registration information with the recorded user information for authentication; and an authentication signal generating means which generates an authentication signal to the electronic device in which the recording medium is built on the basis of authentication determination of the user information determining means to permit the user to use the electronic device.

According to the fourth invention of the present application, a recording medium is managed by a user as recording means such as paper, a metal, ceramics, a magnetic medium, an optical medium, and electronic medium having a recording function.

The fourth invention is different form the third invention in that the recording medium has the functions of the registration information recording means of the third invention and access information recording means which records access information given to respective recording media and that the access information determining means confirms, when a user candidate inputs access information, that the access information is access information given to the user candidate in user authentication.

According to the fifth invention of the present application, a recording medium is managed by a user as recording means such as paper, a metal, ceramics, a magnetic medium, an optical medium, and electronic medium having a recording function.

The fifth invention is different from the fifth invention in that the recording medium has only access information recording means which records access information given to respective recording media and that the access information determining means confirms, when a user candidate inputs access information, that the access information is access information given to the user candidate in user authentication.

The inventions of the present application will be described below in detail with reference to the accompanying drawings.

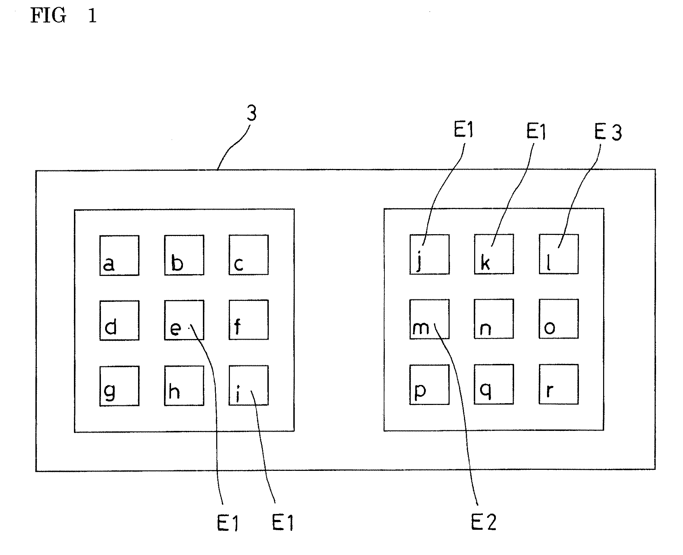

FIG. 1 shows a display surface 3 of a terminal device which displays registration information in execution of an invention of the present application. Reference symbols a, b, c,..., q denote photographs. However, since the alphabets are described for explanation, the alphabets are not present on the display surface.

Reference symbols e, i. j, and k denote user authentication photographs E1, i.e., "information units of user information".

Reference numeral m denotes a user authentication photograph E2 in an unwilling state, i.e., "unwilling authentication signal information".

Reference symbols denote a, b, c, d, f, g, h, n, o, p, and q denote photographs prepared on an authentication system side, i.e., "non-user information" E3.

Registration information B in FIG. 1 described above is recorded on a recording medium 1 or a registration information recording means 11 of an authentication computer 2.

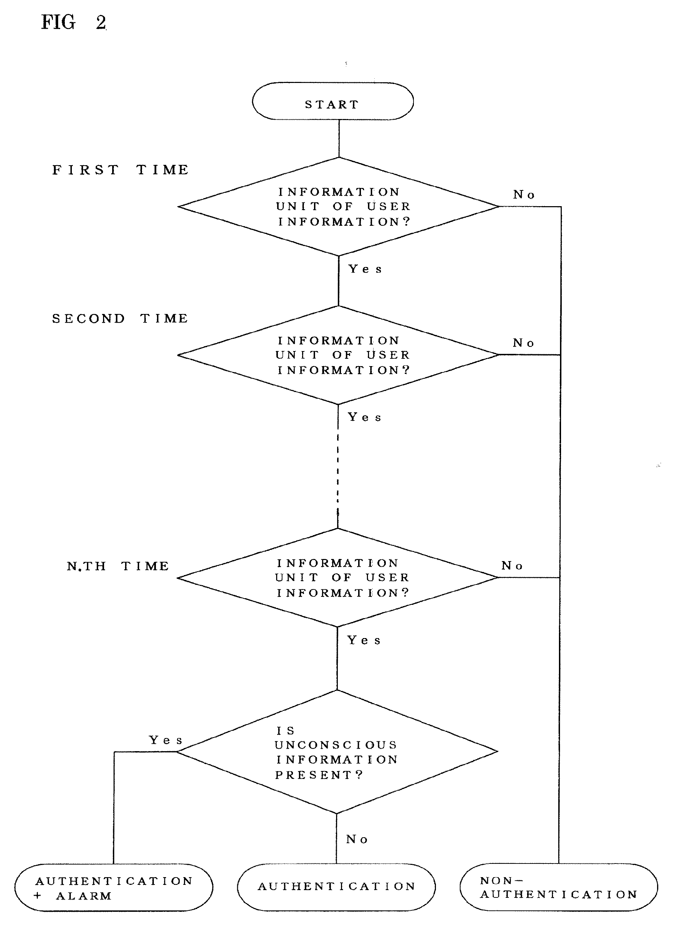

FIG. 2 is a flow chart showing an authenticating operation, in execution of the invention of the present application. In individual authentication, processes are performed according to the flow chart in FIG. 2.

In the first invention, the recording medium 1 on which the registration information B is recorded is issued to a user, and is managed by the user. Therefore, in individual authentication, the "registration information" B is presented on the display surface 3 of an electronic device 4 by the recording medium 1 owned by the user.

Thereafter, one or N of the "information units of user information" E1, E2,... are selected and specified from the "registration information" B on the display surface 3, and then the flow chart in FIG. 2 starts.

In the second invention, a recording means for registration information is controlled under the system side. Therefore, in individual authentication, in response to an input of "access information" C, the system side presents the "registration information" B onto the display surface 3 of the terminal device.

Thereafter, according to the "registration information" on the display surface, one information unit or N information units from the "information units of user information" are selected and specified to start the flow chart in FIG. 2.

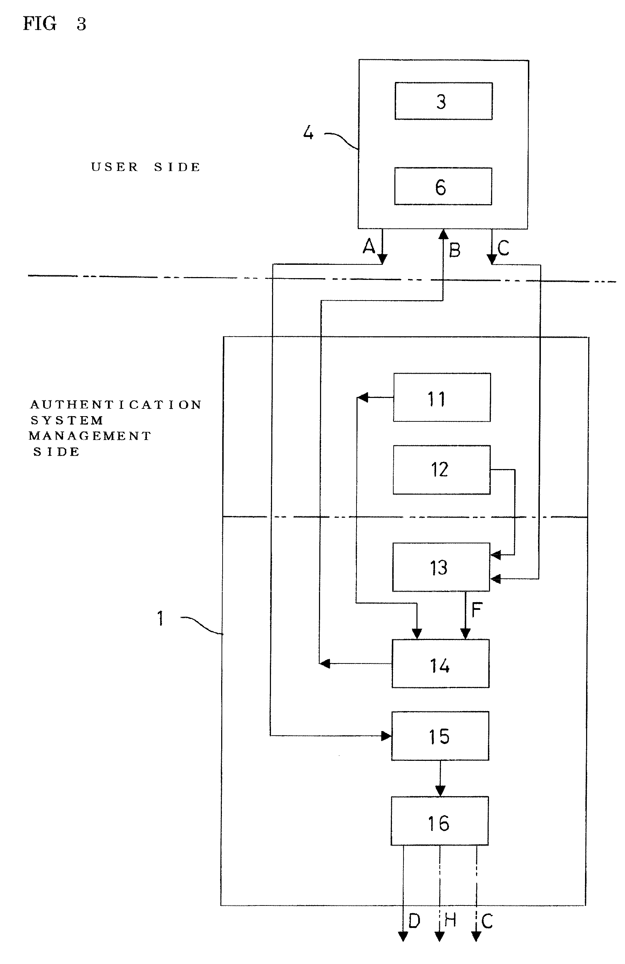

FIG. 3 is a block diagram of an individual authentication system showing an embodiment of the third invention of the present application. The recording medium 1 is defined as a memory function of the electronic device managed on the system side. More specifically, a memory arranged on the authentication computer 2 on the system side or a memory arranged in an electronic transaction computer independent of the authentication computer is used.

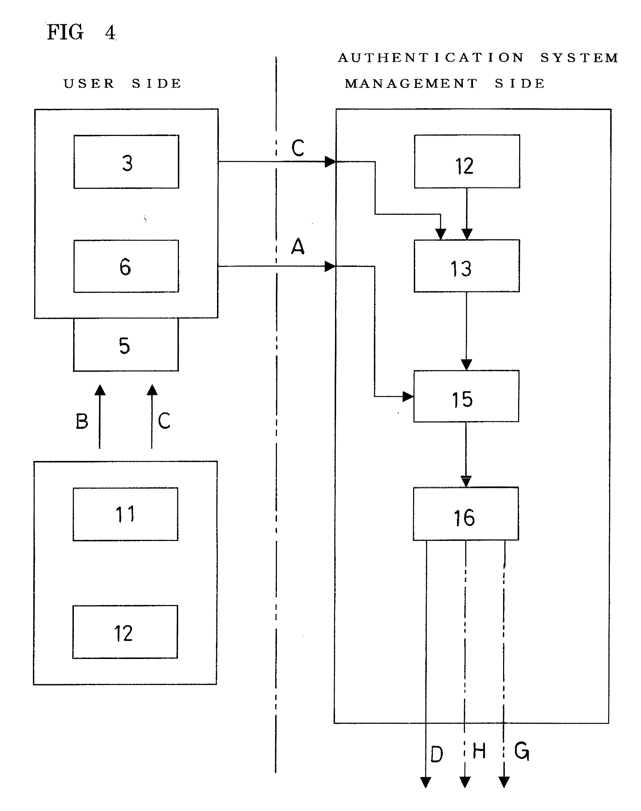

FIG. 4 is a block diagram of an individual authentication system showing an embodiment of the fourth invention of the present application. It is assumed that a recording medium 1 on which the registration information B and access information C are recorded is controlled under a user. It is assumed that the registration information B is managed by the user.

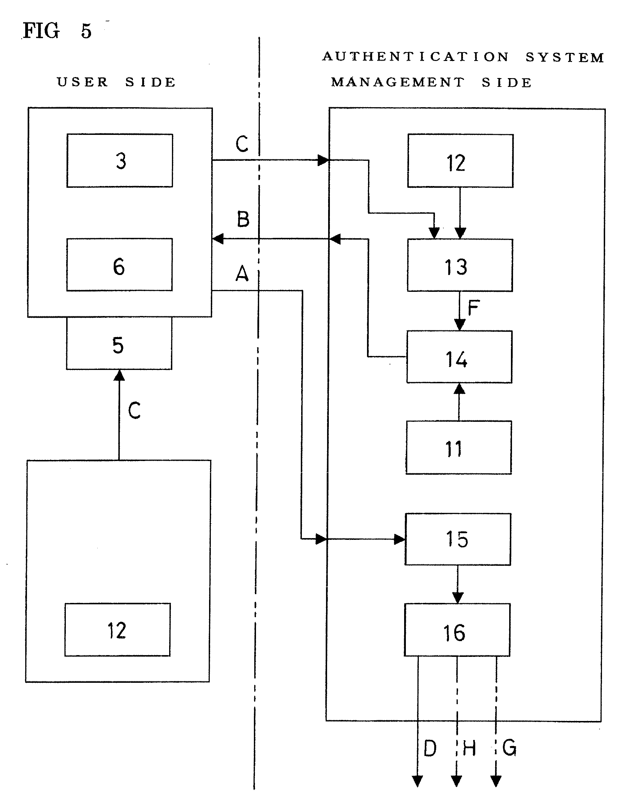

FIG. 5 is a block diagram of an individual authentication system showing an embodiment of the fifth invention of the present application. It is assumed that the recording medium 1 records only the access information C to a registration information recording means and that the registration information B is managed on an authentication system side.

For example, the recording medium 1 is magnetically recorded or printed on a driver's license and held to display the recording medium is displayed on a terminal device through a read means such as a sensor. By using a touch panel method, one or N "information units of user information" are selected and specified. A memory function of the electronic device managed by the user, such as a mobile telephone or a terminal device, may be used as a recording medium.

In FIGS. 3 to 5, reference numeral 11 denotes a registration information recording means which has a function of recording the registration information B shown in FIG. 1. Reference numeral 12 denotes an access information recording means has a function of recording access information C specified to respective recording media. Reference numeral 13 denotes an access information comparison determining means which confirms that the input access information C matches with the access information recorded on the authentication computer, i.e., that the access information C corresponding to the recording medium 1 is input, and generates an access signal F. Reference numeral 14 denotes a registration information presenting means has a function which extracts the registration information B from the registration information recording means 11 by the input of the access signal F and sends the registration information B to an electronic device 4 on the user side to present the registration information to the user side. Reference numeral 15 denotes a user information determining means which records user information A corresponding to respective access information C and compares the recording user information with the user information input by the user to execute the flow chart in FIG. 2. Reference numeral 16 denotes an authentication signal generating means has a function of generating a signal representing authentication results of "authentication" D, "authentication + alarm" G, and "non-authentication" H on the basis of an output signal from the user information determining means 15.

In FIGS. 4 and 5, reference numeral 4 denotes an electronic device such as a terminal device owned by the user and having an input device 6 and a read device 5 which are arranged thereon. The input device 6 is operated to make it possible to input the access information C. The read device 5 inputs recording information of the recording medium 1 (for example, a magnetic card, a paper printed card) by reading a magnetic code with an OCR or the like. The display surface 3 displays the input registration information and the registration information B sent from the system side to achieve the same function as that of the registration information presenting means 14, and operates as a touch-panel input device to facilitate selection of the user information A from the registration information.

In execution of the invention of the present application, with respect to user information, as information known by the user, any known perceptual information may be used.

Any of the following can be used:
visual information such as photograph, picture, drawing, and character,
audial information such as music or ordinary sound,
tactile information such as braille characters or touch sensation, and
olfactory information such as smell.

Of these pieces of information, the visual information is especially preferable for a general healthy individual. Of the various pieces of perceptual information, the visual information is preferable for a person because the visual information has a high discrimination power and high memory recall. However, the audial information or the tactile information other than the visual information may be preferable for the handicapped.

As the fist step of the invention of the present application, information known by a user is registered as information to be authenticated. The information known by the user is memorized by the user in advance, and there is no need to memorize the information again.

As the contents of the perceptual information, any information may be used. It is preferable that the information relates to an object such as a person, a landscape, an animal, a plant, a pet, and a hobby which the user ordinarily contacts for a long period of time. The user contacts the object for the long period of time to more strengthen the memory. The information is memorized and held as a memory in the brain for a long period of time, and is not easily forgotten.

A preferable one of these long-term records, intellectual information related to an object which the user contacts for at least one month or longer, and more preferably, one year or longer. Still more preferably, information which the user contacts for three years or longer is used.

Furthermore, as memory information, memory information which the user contacts one year or longer ago. More preferably, information three years ago is used. Depending on the age of the user, known information which is old as much as possible is preferably used.

Of these pieces of perceptual information, an episode with the past life history or affection of the user is preferably used.

In the cognitive psychology, an episode memory means an event (episode) which can be positioned in a specific temporal or spatial context. On the other hand, a semantic memory is a general comprehension or a memory which can be linguistically described, for example, "the whale is a mammal".

Of episode memories, the affection of the user or a memory which is important in the life history and to which the user commits is more preferably used because the memory is not easily forgotten.

Further, it is desirable that the user information is constituted from at least one information unit, preferably two information units, and more preferably not less than three information units.

When the user information is constituted by a plurality of information units, the information is preferably constituted from memories of the user memorized in different ages and different places.

By constituting the user information from different information units, it becomes possible to heighten the barrier for the morphing by a third person who shared a certain period of the user's life history.

When the user information is constituted by two or more information units, one of the two information units can be used as an unwilling user authentication signal indicating that the user authentication is against the user's will, e.g., forcibly performing user authentication the under threat.

In this case, in order to clearly distinguish the authentications in a willing state and an unwilling state, information having a positive image such as a cheerful or nostalgic image can be used as an information unit for the willing state, and information having a negative image such as a sad or scary image can be selected as an information unit for the unwilling state.

However, in this case, it is preferable that an image that gives a positive or negative impression only to the user is selected, and that an image that gives the same impression to anyone is avoided.

Alternatively, with respect to user authentication in a user willing state and a user unwilling state, information can be synthesized on the basis of the user information and can be selectively used. For example, methods of changing the face in direction, changing hair styles, putting on/off a mustache or glasses, and changing the colors of a photograph into preferable colors or dislike colors can be used.

These syntheses can be achieved by commercially available image correction software or morphing software.

As non-user information, any information unit unknown by the user may be used. However, information which is apparently different from the user information is not preferable because the information lowers the barrier for a third person to set up for the user. Information having the same concept and different contents is preferably used. For example, when the user information is related to a face, information related to a face is used. When the user information is related to a landscape, information related to a landscape of a similar age is used. When the user information is related to a dog, information related to a dog of a type similar to that of the user information is used.

As non-user information, information which can be discriminated from the user information by only the user and which cannot be distinguished from the user information by a third person is preferably used. A human being holds such a capability. For example, in general, parents of duplicate twins can discriminate their children from each other, but others cannot discriminate the children from each other.

Therefore, the user registration information is digitized, and the digitized information is subjected to digital synthesis or digital correction by the commercially available software or the morphing software while being shown to the user to make it possible to synthesize information units which can be distinguished from each other by the user at a certain correction point but seems to be equal to each other.

Registration information constituted by user information and non-user information must be constituted by at least one unit of the user information and at least one unit of the non-user information. More preferably, the registration information is constituted by at least two units of user information and at least four units of non-user information. Further more preferably, the registration information is constituted by two or more units of user information and seven or more units of non-user information.

As a method of presenting the registration information to the user, any one of a parallel presenting method for the registration information as shown in FIG. 1 and a method of sequentially presenting information units can be used.

In any one of the parallel presentation and the sequential presentation, a method in which the positions of the user information and the non-user information are not fixed is preferably used.

A determination whether the user information is selected from the registration information in the individual authentication method is determined by checking whether an information unit serving as the user information is selected. The user need not regenerate the user information.

This is "recognition" from the viewpoint of the cognitive psychology. The "recognition" is basically different from "reproduction" which is a necessary requirement for a password method.

In case of "recognition, when the user information is properly selected, a human being can instantaneously select the user information even from similar target information having a large amount of information.

On the other hand, in case of "reproduction", an amount of information which can be reproduced is limited, and only very short linguistic information can be used.

The registration information may vary for each recording medium.

For example, the registration information A is used in a transaction with bank A, the registration information B is used in a transaction through network B, registration information C is used in a health cost insurance and a hospital card, registration information D is used in a driver's license, registration information E is used in a passport, and registration information F is used in a network procedure for a city hall. In this manner, when different pieces of registration information are used in different authentication media, respectively, a long-term memory and a cognition mechanism of a human being easily authenticate the user information on the basis of the presented registration information, and erroneous authentication is extremely rare.

When different pieces of registration information are used in different media, respectively, even if the registration authentication flows outwardly, the damage caused by the outward flow of the registration can be minimized.

The authentication method can be used by being built in an electronic device (device or machine).

More specifically, a system which stores registration information in an electronic device media, a device, or a machine having a memory function, stores user authentication or an identification code thereof in the device, the machine, or another system, presents some display of registration information to a user candidate as a medium, and regards the user candidate as the user when the user candidate designates the user information in the presented registration information.

In this case, in order to prevent a third person from intruding in the system, the information is desirably encrypted.

The information can be compressed to compress the capacity of the recording medium.

As the electronic device (media, device, or machine) having a memory function, any electronic device having a memory function can be used. For example, a printed medium, a magnetic medium, an optical medium, a semiconductor memory, and the like can be used.

In the recording medium, registration information is described on paper, a resin film, a metal, ceramics, or the like by print, printing, thermal or optical recording, or the like. Identification codes are added to information units, respectively. The identification codes are read by visual observation, a scanner, or the like. Matching between the identification code and another registered user information or another identification code to make it possible to perform user authentication.

As these identification codes, numbers, alphabets, bar-codes, and two-dimensional codes can be used.

As the magnetic memory, a magnetic card, a hard disk, a magnetic tape, a floppy disk, a magneto-optical disk, or the like can be used.

As the optical memory, a CD, a DVD, an optical card, or the like can be used.

Furthermore, as the semiconductor memory, a DRAM, an SRAM, an ReRAM, an EPROM, or the like can be used. An IC card, a mobile telephone, a PDA, a personal computer, an electronic lock, an entering/leaving management device, a home electric telephone product, or the like in which the semiconductor memory is built can be used.

The registration information can be held on the user side. For example, a memory which stores the registration information is owned by a user and presented in authentication to make it possible to authenticate the user.

In this case, the registration information is owned by only the user. Since the concrete image of the user information is memorized in the brain of the user, a system having an extremely high entry barrier for a third person can be realized.

Furthermore, the following method can be employed. That is, the registration information is held on a system side related to the authentication except for the user, and the user has access information to the registration information. In user authentication, the registration information on the system side is called and displayed on a display in front of a user candidate to perform user authentication.

In this case, the registration information is held on only the registration information system side. For this reason, even though the access information of the user is stolen, a third person requires another registration information to set up for the user, and the entry barrier is very high.

The recorded information on the system side is limited to registration information and user information or an identification code thereof and access information to make it possible to prevent the privacy about the user from leaking.

In addition, when the method and a portrait of the user are used, even though the portrait is illegally rewritten, the registration information on the system side cannot be easily rewritten. A very high user authentication system can be constructed.

In the method, only the registration information is owned by the user. As a storage medium held by the user, a medium having a small load on a memory capacity can be used.

The individual authentication method and the individual authentication system according to the present invention can be used in all applications which require user authentication.

For example, the method and system can be used in a financial transaction in a bank or the like, various transaction through networks, a credit card, direct debit of commercial goods, medical inquiry of a medical institution such as a hospital, an insurance document, a driver's license, a passport, a user recognition card for user-limited access, a service of a government or an autonomous body, especially an electronic service, entering/leaving of an office or a house, a key to use an automobile or various devices, a remote control of a home network, and the like. However, the method and system are not limited to these applications.

The individual authentication method and the individual authentication system according to the present invention can be easily used by users in all works of life including the aged because information which is not easily forgotten is used in individual authentication.

Erroneous authentication is extremely rare even though different pieces of user information are registered in a plurality of authentication media, respectively, a malicious third person cannot be easily set up for the user, and a device required for authentication is simple and has a low cost. Furthermore, when authentication is coerced despite the intention of the user, an unwilling authentication signal can be sent without being known by a person coerces the authentication.

According to the invention of the present application, in an individual authentication method and an individual authentication system using a recording medium, user information for individual authentication is constituted by at least one information unit known by a user, both non-user information constituted by at least one information unit unknown by the user and the user information are recorded as registration information for user authentication, and the user information is selected from the presented registration information by selection by a user memory in individual authentication. For this reason, an advantage of making it easy to memorize the user information for the individual authentication and to make it difficult that a third person sets up for the user can be obtained.

In the first and fourth inventions of the present application, the registration information is managed by a user, and individual information for the authentication system can be advantageously protected.

In the second, third, and fifth inventions, the registration is managed on the authentication system side, and the recording medium managed by a user does not include the registration information, so that security against theft and loss of the recording medium is improved.

### Industrial Applicability

The invention of the present application is an effective invention as a means which prevent data (password or cryptographic key) for user authentication from being decoded by a third person, and is an effective invention which safes an electronic commercial transaction to promote utilization of the electronic commercial transaction.

## Claims

1. An individual authentication method using a recording medium comprising:
a. the registration information forming step of registering both user information including at least one information unit known by a user to be registered in authentication and non-user information including at least one information unit unknown by the user in the recording medium in advance to form registration information;
b. the registration information issuing step of issuing at least one of the registration information and access information to access a registered medium to the user;
c. the registration information presenting step of causing a user candidate to present registration information directly or indirectly recorded on the recording medium by using a recording medium owned by the user candidate in user authentication;
d. the user information selecting step of causing the user candidate to select the user information in the presented registration information; and
e. the user authentication step of authenticating the user candidate as the user only when the user candidate selects the user information in the registration information.

2. An individual authentication method using a recording medium comprising:
a. the registration information forming step of registering both user information including at least one information unit known by a user to be registered in authentication and non-user information including at least one information unit unknown by the user for user authentication in the recording medium built in an electronic device in advance to form registration information;
b. the registration information issuing step of issuing access information to access the recording medium on which the registered information to the user;
c. the registration information presenting step of causing a user candidate to access the recording medium of the electronic device by the access information owned by the user candidate to present registration information recorded on the recording medium;
d. the user information selecting step of causing the user candidate to select the user information presented by the recording medium of the electronic device on an authentication management side; and
e. the user authentication step of authenticating the user candidate as the user only when the user candidate selects the user information in the registration information.

3. The individual authentication method using a recording medium according to claim 1 or 2, wherein the user information is selected from any one of a long-term memory and an episode memory of the user.

4. The individual authentication method using a recording medium according to claim 1 or 2, wherein the user information is selected from any one of a long-term memory and an episode memory of the user.

5. The individual authentication method using a recording medium according to claim 1, 2, 3, or 4, wherein the non-user information is non-user information synthesized on the basis of the user information.

6. An individual authentication system using a recording medium, the recording medium being constituted by a memory function by using an electronic device in which a memory function is built,
the memory function having functions of:
registration information recording means which registers both user information including at least one information unit known by a user to be registered in authentication and non-user information including at least one information unit unknown by the user for user authentication in the recording medium in advance to record registration information; and
access information recording means which records access information given to the user, comprising
an authentication computer having:
access information comparison determining means which confirms, when a user candidate inputs access information, that the access information is access information given to the user candidate in user authentication;
registration presenting means which outputs the registration information recorded on the registration information recording means on the basis of generation of a confirmation signal from the access information determining means;
user information determining means which compares input user information selected from the presented registration information with the recorded user information for authentication; and
an authentication signal generating means which generates an authentication signal to the electronic device in which the recording medium is built on the basis of authentication determination of the user information determining means to permit the user to use the electronic device.

7. An individual authentication system using a recording medium,
the recording medium being managed by a user as recording means such as paper, a metal, ceramics, a magnetic medium, an optical medium, and electronic medium having a recording function,
the recording medium having functions of:
registration information recording means which registers both user information including at least one information unit known by the user to be registered in authentication and non-user information including at least one information unit unknown by the user for user authentication in advance to record registration information; and
access information recording means which records access information given to respective recording media, comprising:
an authentication computer having:
access information comparison determining means which confirms, when a user candidate inputs access information, that the access information is access information given to the user candidate in user authentication;
user information determining means which compares input user information selected from registration information with the recorded user information for authentication on the basis of generation of a confirmation signal from the access information determining means; and
an authentication signal generating means to generate an authentication signal to the electronic device to be authenticated by the recording medium on the basis of authentication determination of the user information determining means.

8. An individual authentication system using a recording medium,
the recording medium being managed by a user as recording means such as paper, a metal, ceramics, a magnetic medium, an optical medium, and electronic medium having a recording function,
the recording medium having a function of access information recording means which records access information given to respective recording media, comprising:
an authentication computer having:
access information comparison determining means which confirms, when a user candidate inputs access information, that the access information is access information given from the recording medium to the user candidate in user authentication;
registration information presenting means which outputs the registration information recorded by the registration information recording means on the basis of generation of a confirmation signal from the access information determining means;
user information determining means which compares input user information selected from the presented registration information with the recorded user information for authentication; and
an authentication signal generating means to generate an authentication signal to the electronic device to be authenticated by the recording medium on the basis of authentication determination of the user information determining means.

9. The individual authentication system using a recording medium according to claim 6, 7, or 8, wherein the user information is selected from any one of a long-term memory and an episode memory of the user.

10. the individual authentication system using a recording medium according to claim 6, 7, 8, or 9, wherein at least one of the user information is an information unit for an unwilling authentication signal used when user authentication is performed despite the intention of the user.

11. The individual authentication system using a recording medium according to claim 6, 7, 8, 9, or 10, wherein the non-user information is non-user information synthesized on the basis of the user information.

12. The individual authentication system using a recording medium according to claim 6, 7, 8, 9, 10, or 11, wherein pieces of individual registration information and pieces of access information are held.
